(19) Europäisches Patentamt
European Patent Office
Office européen des brevets

(11) **EP 4 449 112 B1**

(12) **EUROPEAN PATENT SPECIFICATION**

(45) Date of publication and mention
of the grant of the patent:
**03.12.2025 Bulletin 2025/49**

(21) Application number: **21851734.0**

(22) Date of filing: **16.12.2021**

(51) International Patent Classification (IPC):
**G01N 30/32** *(2006.01)* **G01N 30/02** *(2006.01)*

(52) Cooperative Patent Classification (CPC):
**G01N 30/32;** G01N 2030/025

(86) International application number:
**PCT/US2021/063842**

(87) International publication number:
**WO 2023/113804 (22.06.2023 Gazette 2023/25)**

(54) **AUTOMATIC LEAK DETECTION**

AUTOMATISCHE LECKERKENNUNG

DÉTECTION AUTOMATIQUE DE FUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.10.2024 Bulletin 2024/43**

(73) Proprietors:
• **Thermo Fisher Scientific S.p.A**
**20090 Rodano (MI) (IT)**
• **THERMO FINNIGAN LLC**
**San Jose CA 95134 (US)**

(72) Inventors:
• **FACCHETTI, Riccardo**
**20090 Rodano (MI) (IT)**

• **MAGNI, Paolo**
**20090 Rodano (MI) (IT)**
• **QUARMBY, Scott, T.**
**Austin, TX 78728 (US)**
• **SRINIVASAN, Kannan**
**Chelmsford, MA 01824 (US)**

(74) Representative: **Boult Wade Tennant LLP
Salisbury Square House
8 Salisbury Square
London EC4Y 8AP (GB)**

(56) References cited:
US-A1- 2008 141 758    US-A1- 2014 345 365
US-B2- 10 386 343

**Description**

FIELD

The disclosure relates generally to methods and systems for automatically detecting leaks, particularly in a gas chromatography system. The systems and methods may be suitable for use in combination with mass spectrometry (MS), for instance in GC-MS instruments.

BACKGROUND

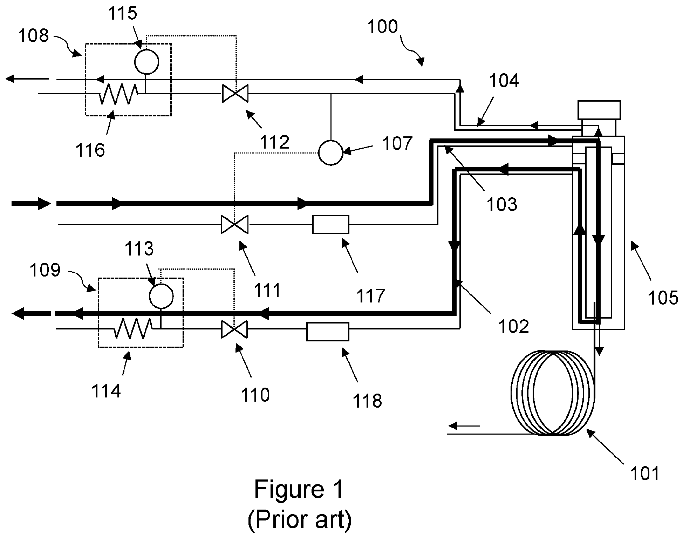

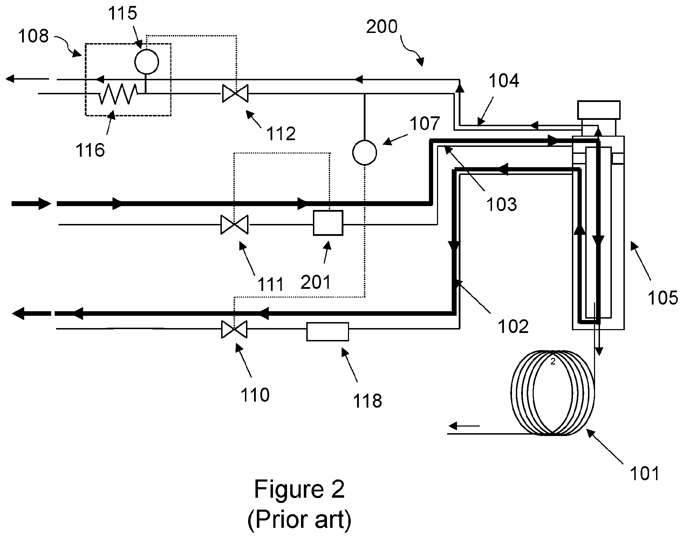

A gas chromatograph (GC) is an instrument used to separate and analyze components in a sample. Figures 1 and 2 show example gas chromatographs 100, 200 that are capable of split mode and splitless mode injection.

During operation, carrier gas is supplied to a column inlet (which may also be referred to herein as an injector or an inlet) 105 of the GC 100, 200. The column inlet may be a split/splitless (SSL) inlet or a programmable temperature vaporizing (PTV) inlet. The PTV inlet may also be capable of operating in a split mode and/or a splitless mode. The column inlet 105 is covered by a septum and a septum purge path 104 provides a flow of carrier gas across the septum via input path 103. A sample is introduced into the carrier gas in the column inlet 105 via a syringe through the septum. The sample then flows, via the carrier gas, into a column 101, which leads to a column vent/detector. The sample/carrier gas mixture may also be exhausted via a split path 102 to a split vent (not shown). The split path 102 and input path 103 may include a charcoal trap 117, 118.

In split mode operation, the split path 102 is open (i.e. valve 110 is open), such that the carrier gas exits the inlet 105 via the column 101, the septum purge path 104 and the split path 102. In splitless mode, the split path 102 is closed (i.e. valve 110 is closed), such that the carrier gas does not exit the column inlet 105 via the split path 102. In both cases, the flow rate of carrier gas flowing into the column inlet 105 is equal to the sum of the flow rates exiting the column inlet 105.

The gas chromatograph 100 illustrated in Figure 1 operates using forward pressure regulation, in which pressure sensor 107 is used to measure head pressure of the inlet 105/column 101 and to control the column flow via valve 111. Figure 2 illustrates a gas chromatograph 200 operating using backpressure regulation, in which the column head pressure/flow is controlled via an outlet valve (not shown).

In the GC system 100 shown in Figure 1, the septum purge and split vent flow rates may be measured by flow sensors 108 and 109, respectively. Flow sensors 108 and 109 may comprise a pressure sensor 113, 115 and a flow restrictor 114, 116. Alternatively, flow sensors 108 and 109 can be mass flow sensors or other types of flow sensors. In the GC system 200 shown in Figure 2, only the septum purge rate may be measured by a flow sensor 108 having a restrictor and the flow through the split flow path 102 may be measured using pressure sensor 107. The flow through the gas inlet path 103 may be measured using a flow sensor 201.

Tightness of a GC pneumatic system is important for accurate analysis of the components in the sample. It is imperative that the injector 105 and the column connection are leak-free.

A leak detector can be used to detect leaks. However, these are expensive and not very stable when measuring small flow rates. Therefore, the ability to detect very small leaks (e.g. with flow rates the typical range of a capillary column or even smaller), is highly limited.

Another method of verifying whether there is a leak requires a user to set an empirical depressurization time for a certain pressure drop. The presence of leaks can then be detected by comparing the measured time to the threshold time configured by the user. However, it is not possible in practice to calculate this threshold time based on theoretical parameters because some of the parameters can be difficult to determine with sufficient accuracy (for example, the column inlet (injector) volume including liners and charcoal traps). Furthermore, some relationships required for the calculation are extremely complex.

US 5,938,817 describes that an abnormality detector monitors gas flow rate into a vaporization chamber. When there is a gas leak in the septum, more carrier gas is needed to maintain constant pressure in the vaporization chamber, so the monitored gas flow rate at the gas inlet increases as the gas leak increases. The abnormality detector sends a warning signal when the monitored value of the flow rate reaches a predetermined threshold. However, when operating in split mode, it is not possible to determine whether there is a leak or whether the increase in the monitored gas flow rate is due to the split flow. As a result, US 5,938,817 describes monitoring a voltage applied to a coil controlling the opening of a split route valve and sending a warning signal when the voltage is below a threshold value. However, this is an inaccurate method of measuring the split flow because of the variability of valves and valve operating conditions.

US 7,559,227 describes that a flow disruption is detected based on a difference between an input flow and an output flow. If there is a difference above a certain error threshold, a leak can be inferred. However, it is difficult to detect a small difference with a wide-range flow sensor is difficult.

US 2008/141758 A1 discloses a method and apparatus for detecting a flow disruption within a gas chromatograph (GC) inlet. A controller controls an input flow of a gas entering a chamber of the GC inlet, and the output flow of gas leaving the chamber. A flow disruption is detected when at least one of the input and output flows deviates from a target value.

Therefore, a method and system that overcomes these issues is desirable.

SUMMARY

Against this background, there is provided a method and system for detecting leaks in a gas chromatograph system as described in the independent claims. Additional aspects of the invention appear in the description and claims.

The present disclosure relates to the determination of the pneumatic tightness of a gas chromatography system and, in particular, the tightness of the injector and column fitting. The present disclosure involves using a gas flow path within the gas chromatography system to create a controlled leak. The time taken for a particular change in pressure when gas flows through the column and the gas flow path is then compared to the time taken for the same change in pressure when the gas flows through the column only. This is used to determine whether there is a leak in the system.

The methods described above may be implemented as a computer program comprising instructions to operate a computer or computer system. The computer program may be stored on a non-transitory computer-readable medium.

The computer system may include a processor, such as a central processing unit (CPU). The processor may execute logic in the form of a software program. The computer system may include a memory including volatile and non-volatile storage medium. The different parts of the system may be connected using a network (e.g. wireless networks and wired networks). The computer system may include one or more interfaces. The computer system may contain a suitable operating system such as UNIX (including Linux), Windows (RTM), for example.

The above methods may be implemented in a system comprising a gas chromatography arrangement and a controller configured to operate the gas chromatography arrangement.

The invention will now be described with reference to the attached drawings depicting different embodiments thereof, the drawings being provided purely by way of example and not limitation.

BRIEF DESCRIPTION OF DRAWINGS

The invention may be put into practice in a number of ways, and preferred embodiments will now be described by way of example only and with reference to the accompanying drawings, in which:

Figure 1 shows a gas chromatography system capable of operating in a split and splitless mode;

Figure 2 shows a gas chromatography system capable of operating in a split and splitless mode;

Figure 3 illustrates a gas chromatography system comprising an on-column inlet;

Figure 4 illustrates a flowchart method for detecting leaks;

Figure 5 shows a flowchart method for determining whether there is a leak; and

Figure 6 shows a flowchart method for detecting leaks.

It should be noted that the Figures are illustrated in schematic form for simplicity and are not necessarily drawn to scale. Like features are provided with the same reference numerals.

DETAILED DESCRIPTION OF PREFERRED EMBODIMENTS

The present disclosure provides a method for detecting leaks in a gas chromatography (GC) system 100, 200, 300. The method involves generating a controlled leak in the GC system 100, 200, 300 whilst gas is flowing through column 101. The controlled leak may then be used as a reference to determine whether there is a leak, instead of requiring a user to set an empirical value. That is, leaks can be automatically detected. Furthermore, leaks can be detected at any time except for when the gas chromatograph is in its "run" state since doing so would interrupt for user's analysis. It is preferable to detect leaks when its oven is in an isothermal state (e.g. when the gas chromatograph is idle), as the column flow will change when a temperature of the oven changes. That is, it is preferred to have a stable oven temperature during the leak check. Accordingly, a leak check may be performed, for example, during an equilibration time before an injection or at the end of a sample analysis.

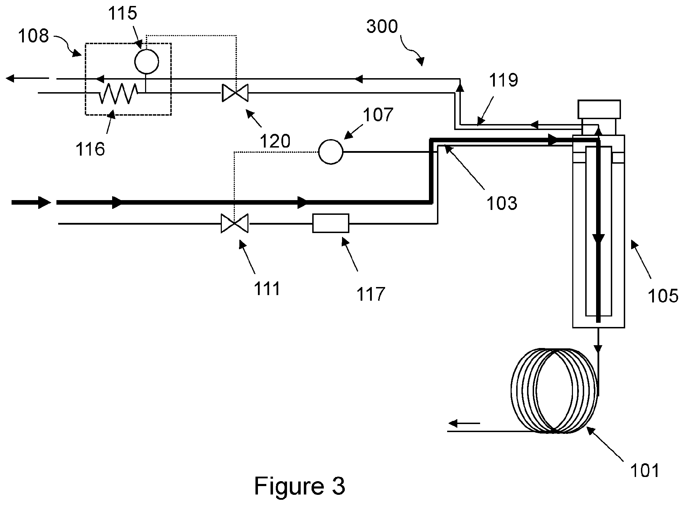

An example GC system 300 suitable for use in this method is shown in Figure 3. The GC 300 includes an on-column inlet 105 and is similar to GCs 100 and 200 discussed above but does not include a split flow path 102 or septum purge path 104. The GC system 300 instead includes a depressurization path 119. The depressurization path 119 may be opened or closed via valve 120. Although this path 119 is shown in Figure 3 as exiting from a location corresponding to that of the septum purge paths 104 in Figures 1 and 2, the depressurization path 119 may be placed at any location on the injector 105.

The GC system 100, 200, 300 may include a controller configured to operate the GC system 100, 200, 300 in accordance with the methods disclosed herein. The GC system 100, 200, 300 may also be used in combination with a mass spectrometer.

A depressurization rate of the GC system 100, 200, 300 can be described as

$$-\frac{dP}{dt} = KF(P), \qquad (1)$$

where P is the inlet (injector) pressure, K is a constant and F(P) is the flow rate, which is a function of the pressure. The flow can be considered constant if it can be assumed that the initial and final pressures are similar, such that Equation (1) becomes

$$\Delta P = KFt, \qquad (2)$$

where t is the depressurization time (i.e. the time taken for the change in pressure $\Delta P$).

Therefore, in general, when exhaust paths 102, 104, 119 of the GC system 100, 200, 300 are closed

$$\Delta P_1 = Kt_1(F_{column} + F_{leaks}), \qquad (3)$$

where $F_{column}$ is the flow rate through the column 101 and $F_{leaks}$ is the flow of any real leaks in the GC system 100, 200, 300. The exhaust paths 102, 104, 119 may be one or more of: a split path 102, a septum purge path 104, a depressurization path 119 and another output path (not shown). $F_{column}$ may be a theoretical flow rate through the column 101 determined based on column geometry. Or, the flow may be measured by some other means. The total flow $F_{column} + F_{leaks}$ may be referred to as $F_1$.

When one or more exhaust paths 102, 104, 119 are open, then

$$\Delta P_2 = Kt_2(F_{column} + F_{leaks} + F_{exhaust}). \qquad (4)$$

where $F_{exhaust}$ is the total flow rate through one or more exhaust paths 102, 104, 119 (i.e. the generated leak). $F_{exhaust}$ may be a theoretical flow rate or one measured by flow sensors 108 and 109 and/or calculated using pressure sensor 107. The total flow rate $F_{column} + F_{leaks} + F_{exhaust}$ may be termed $F_2$.

A depressurization time may be measured both with and without the controlled/generated leak from the exhaust paths 102, 104, 119. The generated leak may be of the same order of magnitude as the column flow, but is not limited to this example.

A depressurization time may be measured both with and without the controlled/generated leak. The generated leak may be of the same order of magnitude as the column flow, but is not limited to this example.

If the change in pressure is the same for the measurements with and without the generated leak (i.e. $\Delta P_1 = \Delta P_2$), then

$$Kt_1(F_{column} + F_{leaks}) = Kt_2(F_{column} + F_{leaks} + F_{exhaust}). \qquad (5)$$

From Equation (5), it can be derived that

$$\frac{F_1}{F_2} = \frac{t_2}{t_1}. \qquad (6)$$

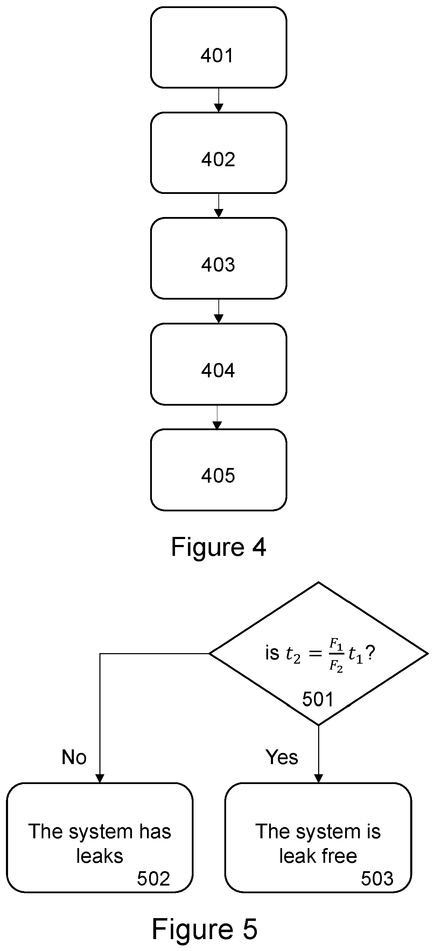

Based on Equation (6), it can be determined whether there is a leak in the system 100, 200, 300, for example based on the depressurization times. This determination will be described in more detail with reference to Figures 4 and 5 and Table 1.

Alternatively, if the depressurization time is kept constant (i.e. $t_1 = t_2$), it can be derived that

4

$$\frac{F_1}{F_2} = \frac{\Delta P_1}{\Delta P_2}. \tag{7}$$

In this case, a change in pressure may be measured both with and without the generated leak. Based on Equation (7), it can be determined whether there is a leak in the system 100, 200, 300, based on the pressure changes, for example. This determination will be described in more detail with reference to Figure 2.

Alternatively, neither the change in pressure nor the depressurization time may be kept constant. In this case, it can be derived that

$$\frac{F_1}{F_2} = \frac{\Delta P_1 t_2}{\Delta P_2 t_1}. \tag{8}$$

The flow rate of the leak can be determined using Equations (3) and (4) based on determined values of $\Delta P_1$, $\Delta P_2$, $t_1$ and/or $t_2$. For example, by assuming that the constant K is the same for all measurements, Equations (3) and (4) can rearranged into the following equation:

$$F_{leaks} = \frac{\Delta P_2 t_1 F_{column} - \Delta P_1 t_2 (F_{column} + F_{exhaust})}{\Delta P_1 t_2 - \Delta P_2 t_1}. \tag{9}$$

Equation (9) may be simplified in the cases where $\Delta P_1 = \Delta P_2$ and $t_1 = t_2$.

The flow rates may be measured in standard cubic centimeters per minute (sccm), i.e. cm$^3$/min at standard pressure and temperature. For example, when operating in split mode, the flow of carrier gas into the column inlet 105 may be measured as 106 sccm and the flow out of the column inlet 105 via the split path 102, the septum purge path 104 and the column 101 may be 100 sccm, 5 sccm and 1 sccm, respectively.

In splitless mode, the flow of carrier gas into the column inlet 105 may be much lower, e.g. 6 sccm, and the flow out of the column inlet 105 via the septum purge path 104 and the column 101 may then be 5 sccm and 1 sccm, respectively. Alternatively, the septum purge path may also be closed in splitless mode. In this case, the flow of carrier gas into the inlet 105 is equal to the flow of gas through the column 101 and may be 1 sccm, for example.

Properties of the column 101, such as its length, internal diameter and thickness of its stationary phase, affect the flow through the column 101. Generally, shorter columns provide relatively high flow at low pressure. The internal volume of the injector 105 affects how quickly the pressure drops when input gas is turned off or input gas set pressure is reduced (e.g., by closing or partially closing valve 111, respectively). However, the split path 102 and septum purge path 104 may have a restrictor 114, 116 and a valve 110, 112 controlling the restrictor 114, 116, such that the flow through these paths can be controlled independently of the internal volume. Likewise, depressurization path 119 may have a restrictor 116 and a valve 120 controlling the restrictor 116.

Therefore, there is provided a method comprising steps of: in a gas chromatography system 100, 200, 300 having at least one closed exhaust path 102, 104, 119, flowing gas through a column 101 of the gas chromatography system 100, 200, 300 at a first flow rate to cause a first change in pressure from a first pressure, the first change in pressure defining a first pressure differential, and measuring the first pressure differential and/or a first time duration for the first change in pressure; opening at least one closed exhaust path 102, 104, 119 and setting a respective second flow rate through each of the at least one open exhaust paths 102, 104, 119; flowing the gas through the column 101 at a third flow rate and each of the at least one open exhaust paths 102, 104, 119 at the respective second flow rate, thereby causing a second change in pressure in the gas chromatography system 100, 200, 300 from a second pressure, the second change in pressure defining a second pressure differential, and measuring the second pressure differential and/or a second time duration for the second change in pressure; and determining whether there is a leak in the gas chromatography system 100, 200, 300 based on the measured first pressure differential and/or first time duration and measured second pressure differential and/or second time duration.

This method provides that leaks can be automatically detected in a gas chromatography system 100, 200, 300. Furthermore, leaks can be detected at any time (although doing so when the gas chromatograph is in its "run" state is not preferred, since doing so would interrupt a user's analysis). It is preferable to detect leaks when its oven is in an isothermal state (e.g. when the gas chromatograph is idle), as the column flow will change when a temperature of the oven changes. That is, it is preferred to have a stable oven temperature during the leak check. Accordingly, a leak check may be performed, for example, during an equilibration time before an injection or at the end of a sample analysis.

The step of determining may comprise determining there is a leak in the gas chromatography system 100, 200, 300 if the first pressure differential and/or first time duration differ from an expected value established based on the respective second pressure differential and/or the second time duration by more than a threshold amount.

Alternatively or additionally, the step of determining may comprise determining there is a leak in the gas chromatography system 100, 200, 300 if an amount of gas indicated by the second time duration differs from an expected value established from an amount of gas indicated by the first time duration and/or if an amount of gas indicated by the first time duration differs from an expected value established from an amount of gas indicated by the second time duration by more than a threshold amount.

Alternatively or additionally, the step of determining may comprise determining there is a leak based on a difference between an expected flow rate and a sum of the first flow rate and the at least one second flow rate that is greater than a threshold amount, wherein the expected flow rate is established based on the first time duration and the second time duration.

In cases where $\Delta P_1 = \Delta P_2$, it may be determined that there is a leak if

$$t_2 < \frac{F_1}{F_2} t_1$$

or

$$\frac{F_1}{F_2} t_1 < t_2 < t_1$$

where $t_2$ is the second time duration, $F_1$ is the first flow rate, $F_2$ is a sum of the first flow rate and at least one second flow rate, and $t_1$ is the first time duration.

In the case where

$$t_2 = \frac{F_1}{F_2} t_1$$

it can be determined that there is not a leak. Based on uncertainty in the measurements, it may be necessary to include a tolerance factor $\varepsilon$ to determine if $t_2$ is significantly smaller or significantly larger than $\frac{F_1}{F_2} t_1$.

Flowing gas through the column 101 may comprise flowing gas through the column 101 and at least one open exhaust path 102, 104, 119.

The step of opening at least one exhaust path 102, 104, 119 may comprise opening multiple exhaust paths 102, 104, 119.

Preferably, one or more of the respective second flow rates may be a multiple of the first flow rate and/or the third flow rate may be a multiple of the first flow rate. In some examples, this may mean that the one or more second flow rates are equal to the first flow rate and/or that the third flow rate is equal to the first flow rate (i.e. the multiple is one). The multiple may be an integer multiple. The one or more respective second flow rates and/or the third flow rate being a multiple of the first flow rate may simplify the determination of whether there is a leak (e.g. by simplifying any calculations).

In other examples, one or more of the respective second flow rates may not be a multiple of the first flow rate and/or the third flow rate may not be a multiple of the first flow rate.

Preferably, the at least one exhaust path 102, 104, 119 may be one or more of: a septum purge path 104, a split path 102 and a depressurization path 119. The exhaust path 102, 104, 119 being the septum purge path 104 or split path 102 means that leak detection can be performed in a standard GC system 100, 200, 300 including one or both of these paths, such as a GC system 100, 200, 300 including an SSL or PTV inlet, without the need to provide an additional path to perform the leak test. The exhaust path 102, 104, 119 being a depressurization path 119 means that the leak test can be performed on a GC system 100, 200, 300 that does not include a split path 102 or a septum purge path 104, such as an on-column inlet 105. Furthermore, the depressurization path 119 can exit any point on the inlet 105 and so can be provided wherever is most convenient for the user.

In some cases, the first pressure may equal to the second pressure, the first pressure differential may be equal to the second pressure differential and/or the first time duration may be equal to the second time duration. This may simplify the determination of whether there is a leak (e.g. by simplifying any calculations).

In a preferred example, there is a further step of pressurizing the gas chromatography system 100, 200, 300 at the first pressure and the second pressure by opening a gas inlet.

In another preferred example, the method includes a step of closing the gas inlet prior to the steps of measuring the first time duration and measuring the second time duration.

In another example, prior to measuring the first pressure differential and/or first time duration, there is a further step of calibrating the column 101 by determining parameters of the column 101. The parameters may comprise a length and an inner diameter of the column 101. The parameters may further include a stationary phase of the column 101. Calibrating the column 101 means that the flow through the column 101 can be more accurately determined as the column 101 depressurizes.

Preferably, the gas chromatography system 100, 200, 300 includes a mass spectrometer. Thus, molecules separated by a gas chromatograph can be provided to the mass spectrometer for detection and analysis.

The method may further comprise, following a determination that there is a leak, a step of logging, via the gas chromatography system 100, 200, 300, a record of the determination and providing an indication to a user that a leak has been detected. Therefore, a user can easily see that a leak has been detected and take steps to correct the leak. In another example, following a determination that there is not a leak, the method may further comprise a step of logging, via the gas chromatography system 100, 200, 300, a record of the determination and providing an indication to a user that the system 100, 200, 300 is leak-free. Therefore, a user can easily see that the gas chromatography system 100, 200, 300 is in working order.

In some cases, following a determination that there is not a leak, the method may include further steps of: determining a first parameter relating the first pressure differential and the first time duration and/or the second pressure differential and the second time duration; flowing gas through the column 101 at a further flow rate to cause a further change in pressure from a further pressure, the further change in pressure defining a further pressure differential, and measuring the further pressure differential and/or a further time duration for the change in pressure; and determining whether there is a leak based on the first parameter, the further pressure differential and the further time duration. Therefore, the parameters known to indicate that there is not a leak can be used to determine at a later time whether the system 100, 200, 300 is still leak-free.

In such cases, the step of determining whether there is a leak may comprise determining that there is a leak if the measured further time duration differs from an expected value established based on the further pressure differential and the first parameter. Alternatively, or additionally, the step of determining may comprise determining that there is a leak if the measured further pressure differential differs from an expected value based on the further time duration and the first parameter.

In another example of such cases, the step of determining whether there is a leak may instead comprise: determining a further parameter relating the further pressure differential and the further time duration; and determining that there is a leak if the further parameter differs from the first parameter by more than a threshold amount. The further parameter may be a constant relating the further pressure differential and the further time duration. If there is no change in the system 100, 200, 300 that would change this constant (e.g. a change of an injector liner would change the internal volume), the further parameter can be compared to the first parameter, which is known to indicate a leak-free system 100, 200, 300.

In yet a further example of such cases, the first parameter may represent a pressure drop per time increment and the step of determining may further comprise: determining an additional parameter representing a pressure drop per time increment based on the further pressure differential and the further time duration; and determining that there is a leak if the additional parameter is greater than the first parameter.

In these examples, it can be determined whether there is a leak at a later time without the need to repeat the measuring steps again.

There is also provided a system 100, 200, 300 comprising a gas chromatography arrangement and a controller configured to operate the gas chromatography arrangement in accordance with the methods described above.

There is further a non-transitory storage medium storing machine-executable instructions that, when executed, cause a computing device to perform the steps of the methods described above.

With reference to Figure 4 there is shown a flowchart of a method for detecting leaks in a gas chromatography system 100, 200, 300. At step 401, one or more exhaust paths 102, 104, 119 of the system 100, 200, 300 are closed. For example, all exhaust paths 102, 104, 119 may be closed such that gas can only flow out of the injector 105 via the column 101 (i.e. the flow through the closed exhaust paths 102, 104, 119 is zero). Alternatively, if there are at least two output paths 102, 104, 119, such as in GCs 100, 200, one output path 102, 104, 119 may be left open in step 201 such that gas flows out of the column 101 and the open output path 102, 104, 119.

The exhaust paths may also be referred to herein as output paths 102, 104, 119 and may comprise a split path (which may also be called a split flow path) 102, a septum purge path 104, a depressurization path 119 or another output path 102, 104, 119. In other words, the exhaust/output paths 102, 104, 119 comprise gas paths exiting the injector 105 that are closeable (i.e. not including the column 101).

The gas inlet path 103 may also be closed or partially closed in step 401, for example by closing or partially closing valve 111. The gas inlet path 103 and exhaust paths 102, 104, 119 may be closed manually or by the GC system 100, 200, 300. With the gas input path 103 closed, the injector 105 depressurizes as gas flows out of the injector 105 via open gas paths (e.g. column path 101 when all the exhaust paths 102, 104, 119 are closed) at a first flow rate. In the case where the gas input path 103 is partially closed, the flow out of the injector 105 should be greater than the flow in through the gas input path 103 to ensure that the injector 105 depressurizes. Partially closing the gas input path 103 means that the depressurization time increases, which can make the system more sensitive to determining whether there are leaks by reducing relative errors in later steps of measuring. In general, for low flows, it is preferable to fully close the gas inlet path 103, but for high flows, partially closing the gas inlet path 103 may have benefits associated with increasing the depressurization time.

At step 402, a time duration for the pressure of the system 100, 200, 300 to change from a first pressure by a first pressure differential may be measured. Alternatively or additionally, the first pressure differential may be determined, for example by calculating a difference between the first pressure and a second pressure measured after the one or more exhaust paths 102, 104, 119 have been closed. The first pressure may be the injector pressure prior to closing the exhaust paths 102, 104, 119 and gas inlet path 103. The pressure differential should be small enough that a relationship between pressure and flow in the column can be approximated as linear, such that Equation (6) applies. The time duration for the change in pressure may be measured manually or by the GC system 100, 200, 300. Step 403 comprises opening the gas inlet to re-pressurize the GC system 100, 200, 300. The system may be re-pressurized at the first pressure, or may be re-pressurized at a different pressure.

Step 403 also comprises opening at least one of the closed exhaust paths 102, 104, 119 or channels to generate a controlled (known) leak. For example, valve 110, valve 112 and/or valve 120 can be opened to allow gas to flow through out of the injector via the split path 102, septum purge path 104 and/or depressurization path 119, respectively. The GC system 100, 200, 300 may have a controller configured to open and close the valves 110, 111, 112, 120. Alternatively, an additional exhaust path 102, 104, 119 may be provided for performing the leak that may be opened in step 403.

The flow through the opened at least one exhaust path 102, 104, 119 may be set to a multiple of the first flow rate. For example, if one exhaust path 102, 104, 119 is opened, the total flow out of the column inlet 105 may be twice the first flow rate. That is, the flow through the column 101 and the one exhaust path 102, 104, 119 may be both equal to the first flow rate (i.e. the multiplier may be one). Alternatively, the flow through the at least one exhaust channel may be set to twice the first flow rate, such that the total flow out of the column inlet 105 is three times the first flow rate. In another example, if two exhaust paths 102, 104, 119 are opened, the total flow out of the injector 105 may be three times that of the first flow rate (i.e. the multiplier may be two). In other words, each of the at least one opened exhaust path 102, 104, 119 may be set to a multiple of the first flow rate.

Alternatively, the flow rate of one of more exhaust paths 102, 104, 119 may be set to a second flow rate, different to the first flow rate. In this example, if more than one exhaust path 102, 104, 119 is opened, the flow rate of each exhaust path 102, 104, 119 may be set to the second flow rate, or the flow rates of each exhaust path 102, 104, 119 may be different. For example, a first exhaust path 102, 104, 119 may have a flow rate equal to the first flow rate and a second exhaust path 102, 104, 119 may have a flow rate equal to the second flow rate. In another example, each of the opened exhaust channels and the column may have a different flow rate.

Prior to or following the opening of the at least one exhaust path 102, 104, 119, the gas inlet path 103 is closed, such that the injector 105 depressurizes as gas flows through the previously open gas paths (e.g. column 101) and the opened at least one exhaust path 102, 104, 119. In this step, the flow through the column 101 may be set to a third flow rate, which may be a multiple of the first flow rate or may be a different flow rate. At step 404, the time taken for the pressure of the GC system 100, 200, 300 to change from a second pressure by a second pressure differential may be measured. Alternatively or additionally, the second pressure differential may be determined. The second pressure may be the same as the first pressure, or may be a different pressure.

At step 405, it is determined whether there is a leak in the GC system 100, 200, 300. This determination may be based on the first depressurization time duration of step 402 and the second depressurization time duration of step 404. Alternatively, the determination may be based on the first change in pressure of step 402 and the second change in pressure of step 404. In another example, the determination may be based on a combination of at least one depressurization time and at least one pressure differential.

The determination may be based on a direct comparison of the depressurization times. For example, if the first pressure differential is equal to the second pressure differential (i.e. $\Delta P_1 = \Delta P_2$) and the depressurization time $t_2$ is shorter than $t_1$ (due to the flow increase caused by the controlled leak) in a manner consistent with Equation (6), the system 100, 200, 300 is leak-free. Otherwise, there is a real leak. This determination will be described in more detail with reference to Figure 5. The first pressure differential may be considered equal to the second pressure differential if the difference between the values is less than 5%, less than 2% or less than 1%. Other thresholds greater than 5% may also be used (e.g., 10%, 20% or 50%).

Similarly, the determination may be based on a direct comparison of the changes in pressure. For example, if the depressurization time $t_2$ is equal to or within a threshold tolerance of $t_1$ (e.g. 50%, 20%, 10%, 5%, 2% or 1%), and the change in pressure $\Delta P_2$ is greater than $\Delta P_1$ in consistence with Equation (7), then the system 100, 200, 300 may be determined to be leak-free.

Alternatively, the determination may be indirectly determined based on the depressurization times. For example, an expected value of $t_2$ may be established based on $t_1$ and the expected value of $t_2$ compared to the determined value of $t_2$.

The expected value may be established based on Equation (6). For example, if $t_1$ is measured to be 10 seconds for a first gas flow rate through the column, following which one of the exhaust paths 102, 104, 119 is opened and the flow set to the first flow rate, the expected value of $t_2$ may be 5 seconds. If the measured value of $t_2$ differs from the expected value, it can be determined that there is a leak in the system. In some examples, the difference in the measured and expected values may be used to locate the general area of the leak. For example, if $t_2$ is more than the expected value, it may be determined that there is a leak in the inlet 105 or open gas paths (e.g. column 101). In another example, if $t_2$ is less than the expected value, it may be determined that there is a leak in the one or more opened exhaust paths 102, 104, 119. If the difference between the measured value of $t_2$ and the expected value is less than 10% of the expected value, it may be determined that the measured value of $t_2$ does not differ from the expected value. Other thresholds greater than 10% or less than 10% may also be used (e.g. 1%, 2%, 5%, 20% or 50%).

Likewise, the determination may be determined indirectly based on the changes in pressure. For example, an expected value of $\Delta P_2$ may be established based on $\Delta P_1$ and the expected value of $\Delta P_2$ compared to the determined value of $\Delta P_2$. The expected value may be established based on Equation (7). For example, if $\Delta P_1$ is measured to be 10 kPa for a first gas flow rate through the column 101, following which one of the exhaust paths 102, 104, 119 is opened and the flow set to the first flow rate, the expected value of $\Delta P_2$ may be 20 kPa, based on Equation (7). If the measured value of $\Delta P_2$ differs from the expected value, it can be determined that there is a leak in the system. Furthermore, if $\Delta P_2$ is less than the expected value, it may be determined that the leak is in the inlet 105 or open gas paths (e.g. column 101). If $\Delta P_2$ is more than the expected value, it may be determined that the leak is in the one or more opened exhaust paths 102, 104, 119. It may only be determined that $\Delta P_2$ differs from the expected value if a difference between the values is less than 10% of the expected value. Other thresholds greater than 10% or less than 10% may also be used (e.g. 1%, 2%, 5%, 20% or 50%).

In another example, an expected value of $t_1$ may be established based on $t_2$ and the expected value of $t_1$ compared to the measured value of $t_1$. The expected value of $t_1$ may be established based on Equation (6). For instance, $t_2$ may be measured as 6 seconds when one exhaust path 102, 104, 119 is open and the flows through the column and the open exhaust path 102, 104, 119 are both equal to a first flow rate. The expected value of $t_1$ for gas flowing through the column only at the first flow rate may then be 12 seconds. If the measured value of $t_1$ differs from the expected value, it can be determined that there is a leak in the system. As discussed above, the nature of the difference from the expected value (more than or less than) may be used to determine where the leak is.

Similarly, an expected value of $\Delta P_1$ may be established based on $\Delta P_2$ and the expected value of $\Delta P_1$ compared to the determined value of $\Delta P_1$. The expected value may be established based on Equation (7). For example, if $\Delta P_2$ is measured to be 10 kPa when flows through the column and an open exhaust channel are equal, the expected value of $\Delta P_1$ when the exhaust channel is closed may then be 5 kPa. If the measured value of $\Delta P_1$ differs from the expected value, it can be determined that there is a leak in the system. As discussed above, the nature of the difference from the expected value (more than or less than) may be used to determine where the leak is. It may only be determined that $\Delta P_1$ is differs from the expected value if a difference between the values is less than 10% of the expected value. Other thresholds greater than 10% or less than 10% may also be used (e.g. 1%, 2%, 5%, 20% or 50%).

Alternatively or additionally, it may be determined whether there is a leak by calculating the total flow out of the injector 105 based on the first and second time durations using Equation (8) and subtracting the sum of flows through the column 101 and the open exhaust paths 102, 104, 119. If there is a difference between these values exceeding than a threshold value, it may be determined that there is a leak. The threshold value may be between 0.01 and 0.1 mL/min. In other examples, the threshold value may be zero, such that any difference between the values is registered as a leak. This method will be described in further detail in relation to Tables 1 and 2.

The determination may also or instead be based on an amount of gas indicated by the depressurization times. If there are no leaks, the volume of gas passing through the column 101 in a first time duration for a first flow rate should be equal to the volume of gas passing through the column 101 and one or more open exhaust paths 102, 104, 119 in a second time duration. Equal may mean that a difference in the volume of gases is less than 5% of at least one of the volumes of gas, for example. Other thresholds for being considered as equal may be used, such as a threshold greater than 5% (e.g., 10%, 20% or 50%) or less than 5% (for example, 2% or 1%).

Otherwise, if the volume of gas indicated by the second time duration differs from an expectation (e.g. an expected value) established by the volume of gas indicated by the first time duration, it may be determined that there is a leak. It may only be determined that there is a leak if the difference between the volume of gas indicated by the second time duration and the expectation is greater than a threshold value. The threshold value may be between 0.01 mL and 0.1 mL or may be zero, as discussed above.

The presence of a leak may be determined based on a combination of the determination methods described above. For example, it may be determined that there is leak only if two or more of the above methods indicate that there is a leak. In another example, it may be determined that there is not a leak if one or more methods indicates that there is not a leak. For instance, if one method indicates that there is a leak but one or more methods indicate that there is not a leak, it may be determined that there is not a leak or vice versa.

Steps 401 to 405 may be performed in a different order. For example, steps 403 to 404 may occur before steps 401 to 402, such that the second time duration may be determined before the first time duration.

An example of how the leak may be determined based on the comparison of time durations is shown in Figure 5. In step 501, it may be determined whether $t_2 = \frac{F_1}{F_2} t_1$ . In other words, it may be determined whether the ratio between time duration $t_2$ and time duration $t_1$ is equal to $\frac{F_1}{F_2}$ . If the ratio is not equal to $\frac{F_1}{F_2}$ , then it is determined that there is a leak in the GC system 100, 200, 300 (step 502). For example, if $t_2$ is less than $\frac{F_1}{F_2} t_1$ or $t_2$ is between $\frac{F_1}{F_2} t_1$ and $t_1$, it may be determined that there is a leak. In other words, if

$$t_2 < \frac{F_1}{F_2} t_1$$

or

$$\frac{F_1}{F_2} t_1 < t_2 < t_1$$

it may be determined that there is a leak. This determination may include an error term $\varepsilon$ such that the calculations determine whether $t_2$ is greater than $\frac{F_1}{F_2} t_1 (1 + \varepsilon)$ or less than $\frac{F_1}{F_2} t_1 (1 - \varepsilon)$ . The value of $\varepsilon$ may be set depending on the uncertainty in the data. For example, $\varepsilon$ may be 1%, 5%, 10%, 20% or 50%.

The location of the leak may be determined based on the relationship between $t_1$ and $t_2$ e.g., if $t_2$ is less than $\frac{F_1}{F_2} t_1$ it may be determined that the leak is in the one or more open exhaust paths 102, 104, 119, or if $t_2$ is between $\frac{F_1}{F_2} t_1$ and $t_1$ it may be determined that the leak is in the inlet 105 or open gas paths . Otherwise, if the relationship based on Equation (6) is satisfied, the GC system 100, 200, 300 is determined to be leak-free (step 503). It may be determined that the ratios are equal if the difference is less than 5%, less than 2% or less than 1%, for example. Other thresholds greater than 5% may also be used (e.g., 10%, 20% or 50%).

For example, $F_1$ may be the flow through the column path 101 and $F_2$ may be equal to the sum of the flow through the column path 101 and the at least one exhaust path 102, 104, 119. If the flow is doubled by opening one of the output paths 102, 104, 119 (e.g. the septum purge path 104) and the flow through the output path 102, 104, 119 is set to the same flow rate as that through the column 101, then $F_2 = 2F_1$. It can then be seen from Equation (6) that the depressurization time period should be half of that when the gas flows only through the column 101 (i.e. $t_2 = 0.5t_1$). If the depressurization time duration is not reduced by that much, then it means that the flow out of the injector was higher than the measured column flow i.e. there is a leak in the GC system 100, 200, 300. If the depressurization time duration is reduced beyond $0.5t_1$, then there is a leak in the opened exhaust path 102, 104, 119.

The example described in Figure 5 assumes that the first pressure differential and the second pressure differential are equal (which may mean they differ in value by less than a threshold value). However, if neither the time durations nor the pressure differentials are equal, it may be determined that there is a leak similarly to the method described above if

$$t_2 < \frac{\Delta P_2}{\Delta P_1} \frac{F_1}{F_2} t_1 (1 - \varepsilon)$$

or

$$\frac{\Delta P_2}{\Delta P_1} \frac{F_1}{F_2} t_1 (1 + \varepsilon) < t_2 < t_1$$

where the error term $\varepsilon$ may be zero or set depending on the uncertainty in the data. For example, $\varepsilon$ may be 1%, 5%, 10%, 20% or 50%. The location of the leak may be determined as described above.

Alternatively, if the time durations are equal and the first pressure differential and the second pressure differential are not, a leak may be determined based on a comparison of the pressure differentials. For example, it may be determined

whether $\Delta P_2 = \frac{F_2}{F_1}\Delta P_1$. In other words, it may be determined whether the ratio between the first pressure differential $\Delta P_1$ and the second pressure differential $\Delta P_2$ is equal to $\frac{F_1}{F_2}$. If the ratio is not equal to $\frac{F_1}{F_2}$, then it is determined that there is a leak in the GC system 100, 200, 300. For example, if $\Delta P_2$ is more than $\frac{F_2}{F_1}\Delta P_1$ or $\Delta P_2$ is between $\frac{F_2}{F_1}\Delta P_1$ and $\Delta P_1$, it may be determined that there is a leak. In other words, if

$$\Delta P_2 > \frac{F_2}{F_1}\Delta P_1$$

or

$$\frac{F_2}{F_1}\Delta P_1 > \Delta P_2 > \Delta P_1$$

it may be determined that there is a leak. As described above, this determination may include an error term $\varepsilon$ such that the calculations determine whether $t_2$ is greater than $\frac{F_1}{F_2}t_1(1+\varepsilon)$ or less than $\frac{F_1}{F_2}t_1(1-\varepsilon)$. The value of $\varepsilon$ may be set depending on the uncertainty in the data. For example, $\varepsilon$ may be 1%, 5%, 10%, 20% or 50%.

As discussed above in relation to Figure 5, the location of the leak may be determined based on the relationship between $\Delta P_1$ and $\Delta P_2$ e.g., if $\Delta P_2$ is more than $\frac{F_2}{F_1}\Delta P_1$ it may be determined that the leak is in the one or more open exhaust paths 102, 104, 119, or if $\Delta P_2$ is between $\frac{F_2}{F_1}\Delta P_1$ and $\Delta P_1$ it may be determined that the leak is in the inlet 105 or open gas paths. Otherwise, if the relationship of Equation (7) is satisfied, the GC system 100, 200, 300 is determined to be leak-free (step 503). It may be determined that the ratios are equal if the difference is less than 5%, less than 2% or less than 1%, for example. Other thresholds greater than 5% may also be used (e.g., 10%, 20% or 50%).

Similarly to the method described above, if neither the time durations nor the pressure differentials are equal, it may be determined that there is a leak if

$$\Delta P_2 > \frac{t_2}{t_1}\frac{F_2}{F_1}\Delta P_1(1+\varepsilon)$$

or

$$\frac{t_2}{t_1}\frac{F_2}{F_1}\Delta P_1(1-\varepsilon) > \Delta P_2 > \Delta P_1$$

where the error term $\varepsilon$ may be zero or set depending on the uncertainty in the data. For example, $\varepsilon$ may be 1%, 5%, 10%, 20% or 50%. The location of the leak may be determined as described above.

Similarly to the method discussed above, it may also be determined that there is a leak based on a comparison of the values of $\Delta P_1 t_2$ and $\Delta P_2 t_1$. This may be appropriate when neither the time durations nor the pressure differentials are kept constant. The comparison may be based on Equation (9), e.g. whether $\Delta P_2 t_1 = \Delta P_1 t_2 \frac{F_2}{F_1}$ or $\Delta P_1 t_2 = \Delta P_2 t_1 \frac{F_1}{F_2}$. If the ratio between the values $\Delta P_1 t_2$ and $\Delta P_2 t_1$ is not equal to the ratio between $F_1$ and $F_2$, it may be determined that there is a leak. Otherwise, if the ratios are equal, it may be determined that there is not a leak. As discussed above, it may be determined that the ratios are equal if the difference is less than 5%, less than 2% or less than 1%, for example. Other thresholds greater than 5% may also be used (e.g., 10%, 20% or 50%).

Following a determination that there is a leak, the gas chromatography system 100, 200, 300 may log the presence of the leak. For example, the GC system 100, 200, 300 may record the time of determining that there is a leak and/or may record a calculated leak rate. The leak rate may be determined as described below with reference to Table 1. The GC system 100 may additionally or alternatively send an indication to a user that the presence of a leak has been detected. For example, the GC system 100, 200, 300 may include a warning device. The warning device may include a light that turns on or a display configured to display a warning when the presence of a leak is detected. Other warning devices that alert the user to the presence of the leak are possible. The logging of a detected leak and/or alerting the user to a detected leak allows the user to investigate the presence of an otherwise unknown leak.

In the above examples, it has been assumed that the the pressure drop is small enough that the relationship between the flow and pressure in the column 101 can be considered as linear. If the pressure drop widens, it can no longer be assumed that this relationship is linear and a more complicated, non linear flow and pressure equation should be applied to avoid any accuracy errors that would hide a leak.

Following a determination that there is not a leak, the measured values of $\Delta P_1$, $\Delta P_2$, $t_1$ and $t_2$ may be used to determine whether there is a leak at a later time. The measured values may be stored in a memory for this purpose.

For example, when the pressure differentials and time durations are known, it is possible to solve Equations (3) and (4) for K. For instance, the values $\frac{\Delta P_1}{t_1}$ and $\frac{\Delta P_2}{t_2}$ may be determined such that the value $KF_{exhaust}$ in Equation (4) can be determined. Since the value of $F_{exhaust}$ will be known because it has been set by the user or the GC system 100, 200, 300, K can then be determined. The value of K can then be used to determine whether a leak has developed. For instance, the value of K can be used as a benchmark for determining that the GC system 100, 200, 300 is leak-free. By determining K at an earlier time, it is no longer necessary to make two measurements of the pressure differentials and depressurization times. Since K is known, there is only one unknown: $F_{leaks}$. This holds true as long as nothing in the system changes that would change K (e.g. a change of the injector liner, which would change the internal volume).

That is, in one example, following step 405/503, gas may be flowed through the GC system 100, 200, 300 (e.g. column 101, or column 101 and one or more open exhaust paths 102, 104, 119) at a further flow rate to cause a further change in pressure from a further pressure by a further pressure differential ($\Delta P_3$). A further time duration ($t_3$) for the further change in pressure and/or the further pressure differential may then be measured. The measurement may then be used to determine whether there is a leak. The further flow rate may be a multiple of the first, second and/or third flow rates. Likewise, the further pressure differential may be the same as the first and/or second pressure differential. Similarly, the further pressure may be the same as the first and/or second pressure.

For example, the determination may be indirectly determined based on the depressurization time and pressure differential. For example, an expected value of $t_3$ may be established based on Equation (3) or, if one or more exhaust paths 102, 104, 119 are open, Equation (4), using the measured value of $\Delta P_3$ and the determined value of K. If the expected value of $t_3$ differs from the measured value of $t_3$, it may be determined that there is a leak in the system. If the difference between the measured value of $t_3$ and the expected value is less than 10% of the expected value, it may be determined that the measured value of $t_3$ does not differ the expected value (i.e. it may be determined that there is not a leak). Other thresholds greater than 10% or less than 10% may also be used (e.g. 1%, 2%, 5%, 20% or 50%).

Likewise, an expected value of $\Delta P_3$ may be established based on Equations (3) or (4) using the measured value of $t_3$ and the determined value of K. If the expected value of $\Delta P_3$ differs from the measured value of $\Delta P_3$, it may be determined that there is a leak in the system. If the difference between the measured value of $\Delta P_3$ and the expected value is less than 10% of the expected value, it may be determined that there is not a leak. Other thresholds greater than 10% or less than 10% may also be used (e.g. 1%, 2%, 5%, 20% or 50%).

In a further example, Equations (3) or (4) may be used to determine a second K value based on the measured values of $t_3$ and $\Delta P_3$. If the determined second value of K differs from the initial value of K by more than a threshold value (e.g. by 1%, 2%, 5%, 10%, 20% or 50% of either or both of the determined K values), it may be determined that there is a leak.

In another example, the initial value of K when there are no leaks may be used to determine a leak flow rate. For example, the column flow rate and flow rate through any open exhaust paths 102, 104, 119 may be known such that Equations (3) or (4) can be used to determine $F_{leaks}$ based on $t_3$ and $\Delta P_3$.

In yet another example, the measured values of $\Delta P_1$ and $t_1$ or $\Delta P_2$ and $t_2$ may be used to determine a first value representing a pressure drop per time increment. Following step 405/503, gas may be flowed through the system 100, 200, 300 to cause the further change in pressure as described above. The further time duration for the further change in pressure and the further pressure differential may then be measured. A second value representing a pressure drop per time increment may then be determined based on the measured further time duration and further pressure differential. If the second value indicates an increase in a pressure drop per time increment greater than a threshold value (e.g. 5% of the first value), it may be determined that there is a leak. The value may also be termed a parameter, and vice versa.

As discussed above in relation to Figure 2, the presence of a leak may be determined based on a combination of the determination methods described above. For example, it may be determined that there is leak only if two or more of the above methods indicate that there is a leak. In another example, it may be determined that there is not a leak if one or more methods indicates that there is not a leak. For instance, if one method indicates that there is a leak but one or more methods indicate that there is not a leak, it may be determined that there is not a leak or vice versa.

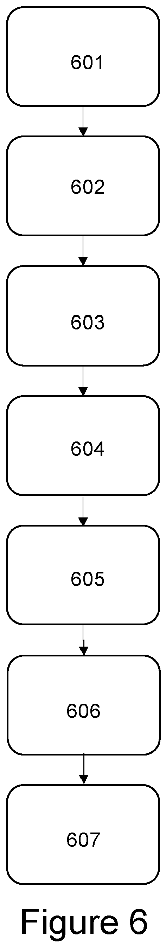

Figure 6 shows a flowchart method for detecting leaks. This method is similar to the more general method described with reference to Figure 4.

In step 601, the theoretical column parameters are set or the column is calibrated. Calibrating the column comprises determining parameters of the column, which may be at least a length and inner diameter of the column. Calibrating the column may also comprise determining a thickness of the stationary phase. The length and inner diameter may be used to determine the flow through the column 101 for each pressure measurement.

Following step 601, the leak check is started. In step 602, the GC system 100, 200, 300 is equilibrated at a first pressure and the gas flow out of the column 101 is set.

At step 603, output path valves 110, 112, 120 are closed, such that gas only flows out of the column 101. This may include closing the split path valve 110, the septum purge valve 112 and/or the depressurization valve 120. The gas may flow out of the column at the previously set flow rate or may be set to flow out of the column at a third flow rate. The third flow rate may be a multiple of the previously set flow rate or may be a different flow rate.

Any gas inlets are closed in step 604. Closing the gas inlets may comprise closing valves inside the GC system 100, 200, 300, such as valve 111. Step 604 also comprises measuring the time taken for the pressure of the GC system 100, 200, 300 to reach a second pressure. The second pressure should be close to the first pressure, since if the pressure drop is too wide, the relationship between the flow and the time duration can no longer be considered as linear. That is, if the pressure drop is too large, doubling the initial flow (e.g. by opening one of the exhaust paths 102, 104, 119) does not halve the time duration for the pressure drop.

Steps 602 to 604 may be performed in another order. For example, the output paths 102, 104, 119 may be closed prior to equilibrating the system or the gas inlets may be closed prior to closing the output paths 102, 104, 119.

At step 605, the injector 105 may be re-pressurized at the first pressure by opening the gas inlets (e.g. by opening valve 111). However, as described with reference to Figure 4, the column inlet 105 may be re-pressurized at a different pressure. Step 605 may also comprise setting the column flow. The column flow may be equal to the column flow measured in step 602.

At least one of the exhaust paths 102, 104, 119 is opened in step 606 (e.g. the septum purge valve 112 or the split valve 110 is opened). The flow through the open exhaust path 102, 104, 119 is also set in this step, which may be achieved using a flow restrictor, such as restrictors 114 or 116. The set flow may be equal to the column flow measured in step 602 and/or step 605. Alternatively, the flow may be set to a different flow rate as described with reference to Figure 4.

Parts of steps 605 and 606 may be performed in a different order. For example, the column flow may be measured after opening the exhaust paths 102, 104, 119 and/or the flow rate through the at least one opened exhaust path 102, 104, 119 may be set before measuring the column flow.

At step 607, gas inlet valves (e.g. valve 111) are closed or partially closed and the time taken for the GC system 100, 200, 300 to drop from the pressure set in step 605 (which may be the first pressure or a different pressure) by a predetermined amount is measured.

It can then be determined whether there is a leak in the GC system 100, 200, 300 based on the time durations measured in steps 605 and 607, as described with reference to Figures 4 and 5.

The following tables (Table 1 and Table 2) shows results from initial experiments and illustrates that the described method and system is capable of detecting leaks. In these experiments, the flow through the column and the exhaust path 102, 104, 119 were set to be equal. However, as described above, the flow though the output path 102, 104, 119 may or may not be a multiple of the flow through the column.

Table 1

| | Column measurements | $F_{column}$ (mL/ min) | $F_{exhaust}$ (mL/ min) | $P_{initial}$ (kPa) | $P_{final}$ (kPa) | $\Delta P_1$ (kPa) | $\Delta P_2$ (kPa) | $t_1$ (s) | $t_2$ (s) | $F_{leaks}$ (mL/ min) | $\frac{F_{leaks}}{F_{column}}$ (%) |
|---|---|---|---|---|---|---|---|---|---|---|---|
| Test 1 | 7m, 0.32mm, 0.25$\mu$m | 3.859 | 3.859 | 30 | 20 | 10 | 10 | 12 | 6 | 0.00 | 0.0 |
| Test 1b | 7m, 0.32mm, 0.25$\mu$m | 3.859 | 3.859 | 30 | 10 | 20 | 20 | 38 | 17 | -0.74 | -19.0 |
| Test 2 | 15m, 0.32mm, 0.25$\mu$m | 2.077 | 2.077 | 40 | 30 | 10 | 10 | 31 | 16 | 0.14 | 6.7 |
| Test 3 | 30m, 0.32mm, 0.1$\mu$m | 32.15 | 32 | 450 | 400 | 50 | 50 | 12 | 6 | -0.15 | -0.5 |
| Test 3b | 30m, 0.32mm, 0.1$\mu$m | 32.15 | 32 | 450 | 400 | 50 | 50 | 12 | 6 | -0.15 | -0.5 |

Table 2

| | Column measurements (m, mm, μm) | $F_{column}$ (mL/ min) | $F_{exhaust}$ (mL/ min) | Artificial leak (mL/ min) | $P_{initial}$ (kPa) | $P_{final}$ (kPa) | $\Delta P_1$ (kPa) | $\Delta P_2$ (kPa) | $t_1$ (s) | $t_2$ (s) | $F_{leaks}$ (mL/m in) | $\dfrac{F_{leaks}}{F_{column}}$ (%) |
|---|---|---|---|---|---|---|---|---|---|---|---|---|
| Test 4a | 7, 0.32, 0.25 | 5.52 | 5.61 | 0 | 41.6 | 36.6 | 5 | 5 | 10 | 5 | 0.09 | 1.6 |
| Test 4b | 7, 0.32, 0.25 | 5.52 | 5.60 | 0.5 | 41.6 | 36.6 | 5 | 5 | 9.4 | 5 | 0.70 | 13 |
| Test 4c | 7, 0.32, 0.25 | 5.52 | 5.60 | 1 | 41.6 | 36.6 | 5 | 5 | 9 | 5 | 1.48 | 27 |
| Test 4d | 7, 0.32, 0.25 | 5.52 | 5.60 | 2.5 | 41.6 | 36.6 | 5 | 5 | 7.5 | 5 | 5.68 | 103 |
| Test 4e | 7, 0.32, 0.25 | 5.52 | 5.60 | 2.5 | 41.6 | 31.6 | 10 | 10 | 12 | 5 | - 1.52 | -28 |
| Test 4f | 7, 0.32 0.25 | 5.52 | 5.60 | 2.5 | 41.6 | 21.6 | 20 | 20 | 27 | 8 | - 3.16 | -57 |
| Test 5a | 30, 0.25, 0.25 | 2.26 | 2.37 | 0 | 150 | 140 | 10 | 10 | 36 | 17 | - 0.14 | -6.2 |
| Test 5b | 30, 0.25, 0.25 | 2.26 | 2.37 | 0.5 | 150 | 140 | 10 | 10 | 32 | 16 | 0.11 | 4.9 |
| Test 5c | 30, 0.25, 0.25 | 2.26 | 2.36 | 1 | 150 | 140 | 10 | 10 | 27 | 15 | 0.69 | 31 |
| Test 5d | 30, 0.25, 0.25 | 2.26 | 2.36 | 5 | 150 | 140 | 10 | 10 | 13 | 10 | 5.61 | 248 |
| Test 5e | 30, 0.25, 0.25 | 2.26 | 2.36 | 5 | 150 | 100 | 50 | 50 | 63 | 44 | 3.21 | 142 |

Time duration $t_1$ represents the time taken for a pressure drop from $P_1$ to $P_2$ when gas flows at a first rate through the column 101 only. Time duration $t_2$ represents the time taken for the same pressure drop when gas flows through the column 101 and the exhaust path at the first rate.

In tests 1, 1b and 2, the exhaust path 102, 104, 119 was the septum purge path 104. In tests 3 and 3b, due to the larger flow rate, the split path 102 was used. However, another exhaust path 102, 104, 119 may be opened instead of, or in addition to, the paths used in these tests.

As shown in tests 1, 2, 3 and 3b, the time duration $t_2$ is half the time duration $t_1$ in the circumstances of these tests, as expected. However, test 1b shows that if the pressure drop is too wide, the relationship between the flow and the time duration is not linear (double the initial flow does not halve the time duration).

Table 1 includes a theoretical leak rate calculated using Equation (9) the depressurization times and pressure differentials in Table 1. It was expected that the system was leak-free, and so the calculated value of $F_{leaks}$ in Table 1 should be approximately zero. For test 1, this was the case. Although tests 1b, 2, 3 and 3b suggest that there is a leak, this is due to the precision of time measurements, which were taken by a stopwatch and are only to the nearest second. Higher resolution time measurements and automating the procedure in firmware of the GC system 100, 200, 300 should provide the expected results. It is noted though that, even using a stopwatch and measuring to the nearest second, the calculated values of $F_{leaks}$ in Table 1 are close to zero. The negative value of $F_{leaks}$ in some cases is assumed to be due to the fact that ther is no actual leak in these tests.

As a further test of the method, an uncontrolled leak was simulated by using a flow restrictor 116 to limit the flow through the purge path 104, the results of which are shown in Table 2. The uncontrolled leak was therefore known in these experiments, but in practice, the uncontrolled leak would be unknown. Tests 4a and 5a in Table 2 in which no artificial leak was simulated are included for reference.

In tests 4b to 4f and 5b to 5e, the artificial leak flow rate was set in increments of 0.5 mL/min. It was not possible to test a smaller simulated leak in these experiments, as the hardware of the gas chromatograph used did not allow a purge flow to be set to less than 0.5 mL/min. The simulated (artificial) leak differs from the controlled leak through the exhaust path. In particular, the controlled leak is used as a reference to determine whether there is a leak, whereas the simulated leak has been used to confirm that an uncontrolled leak (in this case, the artificial leak) can be detected. This confirmation was carried out by calculating the simulated leak rate.

Using test 4b as an example, the time duration $t_2$ represents the time taken for the GC system pressure to drop from 41.6 kPa to 36.6 kPa when the flow through the column 101 was equal to 5.52 mL/min and the flow through the exhaust path was set to 5.60 mL/min. That is, the total set flow out of the column inlet 105 was 11.12 mL/min. In addition, there was a 0.5 L/min artificial leak present.

In general, the simulated leak rate can be determined via Equation (9). Since the first and second pressure differentials in each of the tests in Tables 1 and 2 and 3 were equal, Equation (9) can be simplified to

$$F_{leaks} = \frac{t_1 F_{column} - t_2(F_{column} + F_{exhaust})}{t_2 - t_1}.$$

It can be seen in Table 2 that the determined simulated leak, $F_{leaks}$, is within the same order of magnitude as the set value of the artificial leak.

In tests 5a to 5e, the initial pressure of the GC system 100, 200, 300 was increased to 150 kPa and the pressure drop increased to at least 10 kPa, since the column was much longer than in the other tests. Had the pressure parameters of tests 4a to 4d been used, the flow through the column in tests 5a to 5e would have been much lower than the flow in tests 4a to 4d, due to the difference in column geometry. Therefore, the pressure and pressure drop were increased to better detect the presence of the simulated leak.

Tests 4e, 4f and 5e show that when the pressure drop is too great, the relationship between the time duration and the flow rate is not linear, such that the calculated flow rate of the simulated leak is less accurate, although the presence of a leak would still be determined. In particular, the depressurization of the inlet 105 becomes slower when the pressure drop is too large. This non-linearity is the reason for the negative value of the determined simulated leak flow rate in tests 4e and 4f.

These initial experiments were performed with limited accuracy to confirm the feasibility of the method. Further experiments in different conditions and using more accurate measurement methods, such as writing firmware routines which can carry out the measurements automatically, are needed to assess the sensitivity that can be achieved by the method. The accuracy of the results in Tables 1 and 2 could be improved by implementing fully automated measures in firmware to perform the steps of measuring.

As illustrated by the above tests, it is possible to determine whether there is a leak based on an empirical measurement of a first time duration for a pressure change when gas flows through the column only. That is, a second measurement of the first time duration for the same pressure change when gas flows through the column only may be used to determine whether there is a leak in the GC system 100, 200, 300. For example, the second measurement may be directly compared to the empirical measurement. In another example, the second measurement may be used to calculate a leak rate as described above with reference to Tables 1 and 2. As described in relation to Figure 4, a combination of methods may be used to determine whether there is a leak.

An advantage of obtaining an empirical measurement for specific column parameters is that the measurement may be used across many GC systems using the same column parameters. That is, the user is not required to calculate a threshold depressurization time based on theoretical parameters, which are difficult to calculate with sufficient accuracy.

Therefore, although there are advantages associated with determining whether there is a leak based on a first time duration when gas flows through the column 101 only and a second time duration when gas flows through the column 101 and at least one open exhaust path 102, 104, 119, there may also be advantages associated with determined the presence of a leak based on two measurements of the first time duration.

The methods described herein may be implemented with computer system configurations including hand-held devices, microprocessor systems, microprocessor-based or programmable consumer electronics, minicomputers, mainframe computers and the like. The embodiments can also be practiced in distributed computing environments, where tasks are performed by remote processing devices that are linked through a network.

Certain embodiments can also be embodied as computer-readable code on a non-transitory computer-readable medium. The computer readable medium is any data storage device than can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion.

Although embodiments according to the disclosure have been described with reference to particular types of devices and applications (particularly gas chromatographs) and the embodiments have particular advantages in such case, as discussed herein, approaches according to the disclosure may be applied to other types of device and/or application. The specific calibration details of the GC system 100, 200, 300, whilst potentially advantageous (especially in view of known calibration constraints and capabilities), may be varied significantly to arrive at devices with similar or identical operation.

It will be appreciated that there is an implied "about" prior to temperatures, concentrations, times, pressures, flow rates, cross-sectional areas, voltages, currents, etc. discussed in the present teachings, such that slight and insubstantial deviations are within the scope of the present teachings. Furthermore, values referred to as being "equal" may in fact differ by less than a threshold amount. The threshold amount may be 5%, for example. The threshold may also be greater than 5% (e.g., 10%, 20% or 50%) or less than 5% (for example, 2% or 1 %). 2% or 1%.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion packet) means "one or more" (for instance, one or more ion packets).

Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the invention. That is, an element termed a "first" element (e.g. $t_1$) may instead be termed a "second" element (e.g. $t_2$) and an element termed a "second" element (e.g. $t_2$) may instead be considered a "first" element (e.g. $t_1$).

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein.

Unless otherwise described, all technical and scientific terms used herein have a meaning as is commonly understood by one of ordinary skill in the art to which the various embodiments described herein belongs.

**Claims**

1. A method comprising steps of:

    in a gas chromatography system (100, 200, 300) having at least one closed exhaust path (102, 104, 119), flowing gas through a column (101) of the gas chromatography system (100, 200, 300) at a first flow rate to cause a first change in pressure from a first pressure, the first change defining a first pressure differential, and measuring the first pressure differential and/or a first time duration for the first change in pressure;
    opening at least one closed exhaust path (102, 104, 119) and setting a respective second flow rate through each of the at least one open exhaust paths (102, 104, 119);
    flowing the gas through the column (101) at a third flow rate and each of the at least one open exhaust paths (102, 104, 119) at the respective second flow rate, thereby causing a second change in pressure in the gas chromatography system (100, 200, 300) from a second pressure, the second change defining a second pressure differential, and measuring the second pressure differential and/or a second time duration for the second change in pressure;
    determining whether there is a leak in the gas chromatography system (100, 200, 300) based on the measured first pressure differential and/or first time duration and measured second pressure differential and/or second time duration.

2. The method of claim 1, wherein the step of determining comprises one or more of:

    (a) determining there is a leak in the gas chromatography system (100, 200, 300) if the first pressure differential and/or first time duration differ from an expected value established based on the respective second pressure differential and/or the second time duration by more than a threshold amount;
    (b) determining there is a leak in the gas chromatography system (100, 200, 300) if an amount of gas indicated by the second time duration differs from an expected value established from an amount of gas indicated by the first time duration and/or if an amount of gas indicated by the first time duration differs from an expected value established from an amount of gas indicated by the second time duration by more than a threshold amount; and
    (c) determining there is a leak based on a difference between an expected flow rate and a sum of the first flow rate and the at least one second flow rate that is greater than a threshold amount, wherein the expected flow rate is established based on the first time duration and the second time duration.

3. The method of claim 1 or claim 2, wherein flowing gas through the column (101) comprises flowing gas through the column (101) and at least one open exhaust path (102, 104, 119).

4. The method of any previous claim, wherein one or more of the respective second flow rates are a multiple of the first flow rate and/or wherein the third flow rate is a multiple of the first flow rate.

5. The method of any previous claim, wherein the at least one exhaust path (102, 104, 119) is one or more of: a septum purge path (104), a split path (102) and a depressurization path (119).

6. The method of any previous claim, wherein the first pressure is equal to the second pressure, the first pressure differential is equal to the second pressure differential and/or the first time duration is equal to the second time duration.

7. The method of any previous claim, further comprising a step of:

    pressurizing the gas chromatography system (100, 200, 300) at the first pressure and the second pressure by opening a gas inlet; and/or
    closing the gas inlet prior to the steps of measuring the first time duration and measuring the second time duration.

8. The method of any previous claim, further comprising a step of:
    prior to measuring the first pressure differential and/or first time duration, calibrating the column (101) by determining parameters of the column (101), wherein the parameters comprise a length and an inner diameter of the column (101).

9. The method of any previous claim, wherein the gas chromatography system (100, 200, 300) includes a mass spectrometer.

10. The method of any previous claim, further comprising a step of:
following a determination that there is a leak, logging, via the gas chromatography system, a record of the determination and providing an indication to a user that a leak has been detected.

11. The method of any previous claim, further comprising steps of:

following a determination that there is not a leak:

determining a first parameter relating the first pressure differential and the first time duration and/or the second pressure differential and the second time duration;
flowing gas through the column (101) at a further flow rate to cause a further change in pressure from a further pressure, the further change in pressure defining a further pressure differential, and measuring the further pressure differential and/or a further time duration for the further change in pressure; and
determining whether there is a leak based on the first parameter, the further pressure differential and the further time duration.

12. The method of claim 11, wherein the step of determining whether there is a leak comprises determining that there is a leak if:

the measured further time duration differs from an expected value established based on the further pressure differential and the first parameter; and/or
the measured further pressure differential differs from an expected value based on the further time duration and the first parameter.

13. The method of claim 11 or claim 12, wherein the step of determining whether there is a leak comprises:

(i) determining a further parameter relating the further pressure differential and the further time duration and determining that there is a leak if the further parameter differs from the first parameter by more than a threshold amount; and/or
(ii) determining an additional parameter representing a pressure drop per time increment based on the further pressure differential and the further time duration and determining that there is a leak if the additional parameter is greater than the first parameter, wherein the first parameter represents a pressure drop per time increment.

14. A system (100, 200, 300) comprising a gas chromatography arrangement and a controller configured to operate the gas chromatography arrangement in accordance with any previous claim.

15. A non-transitory storage medium storing machine-executable instructions that, when executed by a computing device configured to control a gas chromatography arrangement, cause the computing device to operate the gas chromatography arrangement to perform the steps of any of claims 1 to 13.


**Patentansprüche**

1. Verfahren, umfassend die Schritte:

in einem Gaschromatographiesystem (100, 200, 300) mit mindestens einem geschlossenen Abgasweg (102, 104, 119), Strömenlassen von Gas durch eine Säule (101) des Gaschromatographiesystems (100, 200, 300) mit einer ersten Durchflussrate, um eine erste Druckänderung von einem ersten Druck zu bewirken, wobei die erste Änderung eine erste Druckdifferenz definiert, und Messen der ersten Druckdifferenz und/oder einer ersten Zeitdauer für die erste Druckänderung;
Öffnen mindestens eines geschlossenen Abgaswegs (102, 104, 119) und Einstellen einer jeweiligen zweiten Durchflussrate durch jeden der mindestens einen offenen Abgaswege (102, 104, 119);
Strömenlassen des Gases durch die Säule (101) mit einer dritten Durchflussrate und durch jeden der mindestens einen offenen Abgaswege (102, 104, 119) mit der jeweiligen zweiten Durchflussrate, wodurch eine zweite Druckänderung in dem Gaschromatographiesystem (100, 200, 300) von einem zweiten Druck herbeigeführt wird, wobei die zweite Änderung eine zweite Druckdifferenz definiert, und Messen der zweiten Druckdifferenz und/oder einer zweiten Zeitdauer für die zweite Druckänderung;

Bestimmen, ob in dem Gaschromatographiesystem (100, 200, 300) ein Leck vorhanden ist, basierend auf der gemessenen ersten Druckdifferenz und/oder ersten Zeitdauer und der gemessenen zweiten Druckdifferenz und/oder zweiten Zeitdauer.

2. Verfahren nach Anspruch 1, wobei der Schritt des Bestimmens eines oder mehrere umfasst von:

(a) Bestimmen, dass in dem Gaschromatographiesystem (100, 200, 300) ein Leck vorhanden ist, wenn die erste Druckdifferenz und/oder die erste Zeitdauer um mehr als einen Schwellenbetrag von einem erwarteten Wert abweichen, der basierend auf der jeweiligen zweiten Druckdifferenz und/oder der zweiten Zeitdauer ermittelt wurde;

(b) Bestimmen, dass in dem Gaschromatographiesystem (100, 200, 300) ein Leck vorhanden ist, wenn eine durch die zweite Zeitdauer angegebene Gasmenge von einem erwarteten Wert abweicht, der aus einer durch die erste Zeitdauer angegebenen Gasmenge ermittelt wurde, und/oder wenn eine durch die erste Zeitdauer angegebene Gasmenge von einem erwarteten Wert abweicht, der aus einer durch die zweite Zeitdauer angegebenen Gasmenge ermittelt wurde, um mehr als einen Schwellenbetrag; und

(c) Bestimmen, dass ein Leck vorhanden ist, basierend auf einer Differenz zwischen einer erwarteten Durchflussrate und einer Summe aus der ersten Durchflussrate und der mindestens einen zweiten Durchflussrate, die größer als ein Schwellenwert ist, wobei die erwartete Durchflussrate basierend auf der ersten Zeitdauer und der zweiten Zeitdauer ermittelt wird.

3. Verfahren nach Anspruch 1 oder 2, wobei das Strömenlassen von Gas durch die Säule (101) das Strömenlassen von Gas durch die Säule (101) und mindestens einen offenen Abgasweg (102, 104, 119) umfasst.

4. Verfahren nach einem der vorstehenden Ansprüche, wobei eine oder mehrere der jeweiligen zweiten Durchflussraten ein Vielfaches der ersten Durchflussrate sind und/oder wobei die dritte Durchflussrate ein Vielfaches der ersten Durchflussrate ist.

5. Verfahren nach einem der vorstehenden Ansprüche, wobei der mindestens eine Abgasweg (102, 104, 119) einer oder mehrere ist von: einem Septum-Spülweg (104), einem geteilten Weg (102) und einem Druckentlastungsweg (119).

6. Verfahren nach einem der vorstehenden Ansprüche, wobei der erste Druck gleich dem zweiten Druck ist, die erste Druckdifferenz gleich der zweiten Druckdifferenz ist und/oder die erste Zeitdauer gleich der zweiten Zeitdauer ist.

7. Verfahren nach einem der vorstehenden Ansprüche, ferner umfassend einen folgenden Schritt:

Beaufschlagen des Gaschromatographiesystems (100, 200, 300) mit dem ersten Druck und dem zweiten Druck durch Öffnen eines Gaseinlasses; und/oder
Schließen des Gaseinlasses vor den Schritten des Messens der ersten Zeitdauer und des Messens der zweiten Zeitdauer.

8. Verfahren nach einem der vorstehenden Ansprüche, ferner umfassend einen folgenden Schritt:
vor dem Messen der ersten Druckdifferenz und/oder der ersten Zeitdauer, Kalibrieren der Säule (101) durch Bestimmen von Parametern der Säule (101), wobei die Parameter eine Länge und einen Innendurchmesser der Säule (101) umfassen.

9. Verfahren nach einem der vorstehenden Ansprüche, wobei das Gaschromatographiesystem (100, 200, 300) ein Massenspektrometer einschließt.

10. Verfahren nach einem der vorstehenden Ansprüche, ferner umfassend einen folgenden Schritt:
nach dem Bestimmen, dass ein Leck vorhanden ist, Erstellen eines Protokolls von der Bestimmung über das Gaschromatographiesystem und Bereitstellen eines Hinweises an einen Benutzer darüber, dass ein Leck erkannt wurde.

11. Verfahren nach einem der vorstehenden Ansprüche, ferner umfassend folgende Schritte:

nach dem Bestimmen, dass kein Leck vorhanden ist:

Bestimmen eines ersten Parameters, der die erste Druckdifferenz und die erste Zeitdauer und/oder die zweite Druckdifferenz und die zweite Zeitdauer in Beziehung setzt;

Strömenlassen von Gas durch die Säule (101) mit einer weiteren Durchflussrate, um eine weitere Druckänderung von einem weiteren Druck zu bewirken, wobei die weitere Druckänderung eine weitere Druckdifferenz definiert, und Messen der weiteren Druckdifferenz und/oder einer weiteren Zeitdauer für die weitere Druckänderung; und

Bestimmen, ob ein Leck vorhanden ist, basierend auf dem ersten Parameter, der weiteren Druckdifferenz und der weiteren Zeitdauer.

12. Verfahren nach Anspruch 11, wobei der Schritt des Bestimmens, ob ein Leck vorhanden ist, das Bestimmen umfasst, dass ein Leck vorhanden ist, wenn:

die gemessene weitere Zeitdauer von einem erwarteten Wert abweicht, der basierend auf der weiteren Druckdifferenz und dem ersten Parameter ermittelt wurde; und/oder

die gemessene weitere Druckdifferenz von einem erwarteten Wert basierend auf der weiteren Zeitdauer und des ersten Parameters abweicht.

13. Verfahren nach Anspruch 11 oder 12, wobei der Schritt des Bestimmens, ob ein Leck vorhanden ist, umfasst:

(i) Bestimmen eines weiteren Parameters, der die weitere Druckdifferenz und die weitere Zeitdauer in Beziehung setzt, und Bestimmen, dass ein Leck vorhanden ist, wenn sich der weitere Parameter um mehr als einen Schwellenbetrag von dem ersten Parameter unterscheidet; und/oder

(ii) Bestimmen eines zusätzlichen Parameters, der einen Druckabfall pro Zeitschritt darstellt, basierend auf der weiteren Druckdifferenz und der weiteren Zeitdauer, und Bestimmen, dass ein Leck vorhanden ist, wenn der zusätzliche Parameter größer als der erste Parameter ist, wobei der erste Parameter einen Druckabfall pro Zeitschritt darstellt.

14. System (100, 200, 300), das eine Gaschromatographieanordnung und eine Steuerung umfasst, die konfiguriert ist, um die Gaschromatographieanordnung nach einem der vorstehenden Ansprüche zu betreiben.

15. Nichtflüchtiges Speichermedium, das maschinenausführbare Anweisungen speichert, die, wenn sie von einer Computervorrichtung ausgeführt werden, konfiguriert ist, um eine Gaschromatographieanordnung zu steuern, die Computervorrichtung veranlassen, die Gaschromatographieanordnung zu betreiben, um die Schritte eines der Ansprüche 1 bis 13 durchzuführen.

**Revendications**

1. Procédé comprenant les étapes consistant à :

dans un système de chromatographie en phase gazeuse (100, 200, 300) ayant au moins une voie d'échappement fermée (102, 104, 119), faire circuler un gaz à travers une colonne (101) du système de chromatographie en phase gazeuse (100, 200, 300) à un premier débit pour provoquer un premier changement de pression à partir d'une première pression, le premier changement définissant un premier différentiel de pression, et mesurer le premier différentiel de pression et/ou une première durée pour le premier changement de pression ;

ouvrir au moins une voie d'échappement fermée (102, 104, 119) et régler un deuxième débit respectif à travers chacune des au moins une voie d'échappement ouverte (102, 104, 119) ;

faire circuler le gaz à travers la colonne (101) à un troisième débit et à travers chacune des au moins une voie d'échappement ouverte (102, 104, 119) au deuxième débit respectif, provoquant ainsi un second changement de pression dans le système de chromatographie en phase gazeuse (100, 200, 300) à partir d'une seconde pression, le second changement définissant un second différentiel de pression, et mesurer le second différentiel de pression et/ou une seconde durée pour le second changement de pression ;

déterminer s'il y a une fuite dans le système de chromatographie en phase gazeuse (100, 200, 300) sur la base du premier différentiel de pression et/ou de la première durée mesurés et du second différentiel de pression et/ou de la seconde durée mesurés.

2. Procédé selon la revendication 1, dans lequel l'étape de détermination comprend un ou plusieurs parmi :

(a) le fait de déterminer qu'il y a une fuite dans le système de chromatographie en phase gazeuse (100, 200, 300) si le premier différentiel de pression et/ou la première durée diffèrent d'une valeur attendue établie sur la base du second différentiel de pression et/ou de la seconde durée respectifs, de plus d'une quantité seuil ;
(b) le fait de déterminer qu'il y a une fuite dans le système de chromatographie en phase gazeuse (100, 200, 300) si une quantité de gaz indiquée par la seconde durée diffère d'une valeur attendue établie à partir d'une quantité de gaz indiquée par la première durée et/ou si une quantité de gaz indiquée par la première durée diffère d'une valeur attendue établie à partir d'une quantité de gaz indiquée par la seconde durée, de plus d'une quantité seuil ; et
(c) le fait de déterminer qu'il y a une fuite sur la base d'une différence entre un débit attendu et une somme du premier débit et de l'au moins un deuxième débit qui est supérieure à une quantité seuil, dans lequel le débit attendu est établi sur la base de la première durée et de la seconde durée.

3. Procédé selon la revendication 1 ou la revendication 2, dans lequel la circulation de gaz à travers la colonne (101) comprend la circulation de gaz à travers la colonne (101) et au moins une voie d'échappement ouverte (102, 104, 119).

4. Procédé selon l'une quelconque revendication précédente, dans lequel un ou plusieurs des seconds débits respectifs sont un multiple du premier débit et/ou dans lequel le troisième débit est un multiple du premier débit.

5. Procédé selon l'une quelconque revendication précédente, dans lequel l'au moins une voie d'échappement (102, 104, 119) est une ou plusieurs parmi : une voie de purge de septum (104), une voie de division (102) et une voie de dépressurisation (119).

6. Procédé selon l'une quelconque revendication précédente, dans lequel la première pression est égale à la seconde pression, le premier différentiel de pression est égal au second différentiel de pression et/ou la première durée est égale à la seconde durée.

7. Procédé selon l'une quelconque revendication précédente, comprenant en outre l'étape consistant à :

mettre sous pression le système de chromatographie en phase gazeuse (100, 200, 300) à la première pression et à la seconde pression en ouvrant une entrée de gaz ; et/ou
fermer l'entrée de gaz avant les étapes de mesure de la première durée et de mesure de la seconde durée.

8. Procédé selon l'une quelconque revendication précédente, comprenant en outre l'étape consistant à :
avant la mesure du premier différentiel de pression et/ou de la première durée, étalonner la colonne (101) en déterminant des paramètres de la colonne (101), dans lequel les paramètres comprennent une longueur et un diamètre interne de la colonne (101).

9. Procédé selon l'une quelconque revendication précédente, dans lequel le système de chromatographie en phase gazeuse (100, 200, 300) comporte un spectromètre de masse.

10. Procédé selon l'une quelconque revendication précédente, comprenant en outre l'étape consistant à :
suite à une détermination qu'il y a une fuite, consigner, par l'intermédiaire du système de chromatographie en phase gazeuse, un enregistrement de la détermination et fournir une indication à un utilisateur qu'une fuite a été détectée.

11. Procédé selon l'une quelconque revendication précédente, comprenant en outre les étapes consistant à :
suite à une détermination qu'il y n'a pas de fuite :

déterminer un premier paramètre reliant le premier différentiel de pression et la première durée et/ou le second différentiel de pression et la seconde durée ;
faire circuler un gaz à travers la colonne (101) à un débit supplémentaire pour provoquer un changement de pression supplémentaire à partir d'une pression supplémentaire, le changement de pression supplémentaire définissant un différentiel de pression supplémentaire, et mesurer le différentiel de pression supplémentaire et/ou une durée supplémentaire pour le changement de pression supplémentaire ; et
déterminer s'il y a une fuite sur la base du premier paramètre, du différentiel de pression supplémentaire et de la durée supplémentaire.

12. Procédé selon la revendication 11, dans lequel l'étape consistant à déterminer s'il y a une fuite comprend le fait de déterminer qu'il y a une fuite si :

la durée supplémentaire mesurée diffère d'une valeur attendue établie sur la base du différentiel de pression supplémentaire et du premier paramètre ; et/ou
le différentiel de pression supplémentaire mesuré diffère d'une valeur attendue basée sur la durée supplémentaire et le premier paramètre.

13. Procédé selon la revendication 11 ou la revendication 12, dans lequel l'étape consistant à déterminer qu'il y a une fuite comprend :

(i) la détermination d'un paramètre supplémentaire reliant le différentiel de pression supplémentaire et la durée supplémentaire, et la détermination qu'il y a une fuite si le paramètre supplémentaire diffère du premier paramètre de plus d'une quantité seuil ; et/ou
(ii) la détermination d'un paramètre additionnel représentant une chute de pression par incrément de temps sur la base du différentiel de pression supplémentaire et de la durée supplémentaire, et la détermination qu'il y a une fuite si le paramètre additionnel est supérieur au premier paramètre, dans lequel le premier paramètre représente une chute de pression par incrément de temps.

14. Système (100, 200, 300) comprenant un agencement de chromatographie en phase gazeuse et un dispositif de commande configuré pour faire fonctionner l'agencement de chromatographie en phase gazeuse conformément à l'une quelconque revendication précédente.

15. Support de stockage non transitoire stockant des instructions exécutables par machine qui, lorsqu'elles sont exécutées par un dispositif informatique configuré pour commander un agencement de chromatographie en phase gazeuse, amènent le dispositif informatique à faire fonctionner l'agencement de chromatographie en phase gazeuse pour réaliser les étapes selon l'une quelconque des revendications 1 à 13.

Figure 1
(Prior art)

Figure 2
(Prior art)

Figure 3

401

402

403

404

405

Figure 4

is $t_2 = \frac{F_1}{F_2} t_1$?

501

No

Yes

The system has leaks

502

The system is leak free

503

Figure 5

Figure 6

**EP 4 449 112 B1**

## REFERENCES CITED IN THE DESCRIPTION

**Patent documents cited in the description**

- US 5938817 A
- US 7559227 B
- US 2008141758 A1